# EUROPÄISCHE PATENTSCHRIFT

(11) **EP 1 506 922 B1**
(45) Veröffentlichungstag und Bekanntmachung des Hinweises auf die Patenterteilung: **28.05.2008**
(21) Anmeldenummer: 04016283.6
(22) Anmeldetag: 10.07.2004
(51) Int. Cl.: B64C 23/04, B64C 21/00

(54) **Verfahren und Strömungskörper mit einer Vorrichtung zum Reduzieren eines mit einem begrenzten Überschallströmungsgebiet verbundenen Strömungswiderstands**
Method and aerodynamic body with device for reducing the drag of a limited supersonic flow region
Procédé et corps aérodynamique avec dispositif pour réduire la traînée associée avec un écoulement supersonique limité

(30) Priorität: 18.07.2003 DE 10332665
(43) Veröffentlichungstag der Anmeldung: 16.02.2005
(73) Patentinhaber: Deutsches Zentrum für Luft- und Raumfahrt e.V., 51147 Köln (DE)
(72) Erfinder: Dietz, Guido, Dr.-Ing., 37085 Göttingen (DE)
(74) Vertreter: Rehberg Hüppe + Partner

(56) Entgegenhaltungen:
- WO-A-00/01579
- US-A- 4 354 648
- US-A- 4 706 910

## Beschreibung

Die Erfindung betrifft ein Verfahren und einen Strömungskörper mit einer Vorrichtung zum Reduzieren eines Strömungswiderstands, der mit einem begrenzten Überschallströmungsgebiet, das sich über einer In einer Strömungsrichtung umströmten Oberfläche des Strömungskörpers ausbildet und das mit einem starken Verdichtungsstoß abschließt.

Besonderes Augenmerk gilt dabei dem als Wellenwiderstand bezeichneten Anteil des Strömungswiderstands. Aber auch der Anteil des viskosen Widerstands soll niedrig gehalten, d.h. möglichst gesenkt werden.

### STAND DER TECHNIK

Moderne Verkehrsflugzeuge bewegen sich bei Reisegeschwindigkeiten, die sehr nahe an der Schallgeschwlndlgkelt der umgebenden Luft liegen. Bei Geschwindigkeiten über einer kritischen Machzahl, die das Verhältnis von Fluggeschwindigkeit zur Schallgeschwindigkeit angibt, bilden sich über der Oberfläche des Flugzeugs lokale Überschallströmungsgebiete aus, die in der Strömungsrichtung im Allgemeinen durch einen starken Verdichtungsstoß abgeschlossen werden. Der starke Verdichtungsstoß geht mit einem Totaldruckverlust und einer Entropiezunahme einher, wodurch ein erheblicher Anteil am Gesamtwiderstand des Flugkörpers hervorgerufen wird, der ale Wellenwiderstand bezeichnet wird. Dieser Wellenwiderstand führt zu einem erhöhten Treibstoffverbrauch, und daher wird angestrebt, ihn möglichst gering zu halten. Entsprechendes gilt für andere Strömungskörper und hier insbesondere für andere Auftriebskörper mit schallnahen Relativgeschwindigkeiten zum umgebenden Fluid, wie etwa einem vorschlagenden Blatt eines Hubschrauberrotors im Reiseflug.

Durch schlanke Profile und schiebende Tragflügelanordnungen kann erreicht werden, dass die kritische Machtzahl, ab der lokale Überschallströmungsgebiete über der Saugseite eines Auftriebskörpers entstehen, relativ hoch ist. Durch die Form sogenannter superkritischer Profile wird die starke Beschleunigung der Überschallströmung über der Saugseite soweit abgemindert, dass der Verdichtungsstoß als Abschluss des Überschallströmungsgebiets eine geringe Stärke hat oder sogar zu einer isentropen Verdichtung degeneriert.

Weitere Maßnahmen zur Reduzierung des Wellenwiderstands aufgrund eines ein Überschallströmungsgebiet abschließenden starken Verdichtungsstoßes sind aus E. Stanewsky, J. Delery, J. Fulker, W. Geißler (Herausgeber): EUROSHOCK - Drag Reduction by Passive Shock Control, ISBN 3-528-07656-9, Vieweg, 1997 sowie E. Stanewsky, J. Delery, J. Fulker, P. de Matteis (Herausgeber): Drag Reduction by Shock and Boundary Layer Control, ISBN 3-540-433 7-1, Springer, 2002 bekannt.

Dazu gehört es, die Stoßstärke eines ein Überschallströmungsgebiet abschließenden starken Verdichtungsstoßes und damit den Wellenwiderstand des Strömungskörpers durch Oberflächenbeulen zu reduzieren. Von den Oberflächenbeulen gehen schwache Verdichtungsstöße aus, durch die die Überschallströmung vor dem Erreichen des starken Verdichtungsstoßes hindurchtritt und abgebremst wird. Im Idealfall tritt ein starker Verdichtungsstoß hinter den künstlich hervorgerufenen schwachen Verdichtungsstößen zumindest im Bereich nahe der Oberfläche des Strömungskörpers überhaupt nicht mehr auf.

Eine weitere beschriebene Maßnahme zur Reduzierung des Wellenwiderstands ist die sogenannte passive Ventilation. Unterhalb der Oberfläche des Strömungskörpers werden Hohlräume angeordnet, die vor und hinter dem starken Verdichtungsstoß geöffnet sind. Durch den Druckunterschied vor und hinter dem starken Verdichtungsstoß wird eine Strömung durch die Hohlräume induziert, die die Grenzschicht vor dem starken Verdichtungsstoß so aufdickt, dass die Stoßstärke des starken Verdichtungsstoßes durch von der Grenzschicht induzierte schwache Verdichtungsstöße vermindert wird.

Beide bis hierher beschriebenen passiven Maßnahmen zum Reduzieren des Wellenwiderstands sind lokale Ansätze, die auf den Ort des starken Verdichtungsstoßes am Ende des Überschallströmungsgebiets ausgerichtet sind. Die Lage des starken Verdichtungsstoßes ist jedoch über verschiedene Umströmungszustände, insbesondere verschiedene Strömungsgeschwindigkeiten und Winkel des Strömungskörpers zur Strömungsrichtung, nicht konstant. Vielmehr verschiebt sich die Lage des starken Verdichtungsstoßes mit einer Veränderung der Umströmungszustände ganz erheblich in der Strömungsrichtung. Dies bedeutet, dass die bekannten passiven Maßnahmen beispielsweise tatsächlich nur bei ganz bestimmten Reisegeschwindigkeiten eines Flugzeugs wirksam sein können.

Aus den zitierten Druckschriften sind auch aktive Maßnahmen zur Abschwächung des starken Verdichtungsstoßes am Ende eines Überschallströmungsgebietes bekannt. Hierbei handelt es sich beispielsweise um eine adaptive Form der umströmten Oberfläche, mit der die Lage einer Oberflächenbeule an die aktuelle Lage des starken Verdichtungsstoßes angepasst werden kann. Der apparative Aufwand für diese Maßnahme einschließlich der Steuerung der Adaption ist jedoch erheblich.

Ein hoher Aufwand ist auch mit einer ebenfalls bekannten aktiven Ventilation verbunden, bei der die Strömung vor dem starken Stoß durch Absaugen und/oder Einblasen in die Grenzschicht der Strömung an der umströmten Oberfläche beeinflusst wird. Zudem wird hierbei die Grenzschicht selbst massiv gestört, und es ist schwierig, eine poröse Oberfläche, durch die das aktive Einblasen und/oder Absaugen erfolgt, funktionsfähig, d.h. sauber zu halten.

Auch der Energieverbrauch aktiver Maßnahmen zum Reduzieren des Wellenwiderstands ist als nachteilig anzusehen.

Alle bisherigen praktischen Ansätze zur Reduzierung des Wellenwiderstands gehen davon aus, dass die Maßnahme zur Beeinflussung des starken Verdichtungsstoßes im Wesentlichen über dessen gesamte Erstreckung quer zu der Strömungsrichtung ergriffen werden müssen.

In H. A. Holden, H. Babinsky: Shock/Boundary Layer Interaction Control Using 3D Bumps, CEAS Aerospace Aerodynamics Research Conference, 10.-12. Juni, Cambridge (UK), 2002, wo über aktuelle Forschung an dreidimensionalen Oberflächenbeulen berichtet wird, gibt es einen Hinweis darauf, dass eine Verminderung des Wellenwiderstands auch abseits des Orts einer Oberflächenbeule erreichbar ist.

Die US-A-4,354,648 beschreibt eine Vorrichtung zur Verhinderung der Strömungsablösung von einer überströmten Oberfläche. Hierzu werden niedrige stabförmige Elemente in mehreren sich quer zu der Strömungsrichtung erstreckenden Reihen hintereinander an der überströmten Oberfläche angeordnet. Auch jedes einzelne stabförmige Element ist quer zu der Strömungsrichtung angeordnet. Die Abstände der Elemente In den Reihen sind kleiner als die Längen der stabförmigen Elemente und kleiner als die Abstände der Reihen in Strömungsrichtung. Die Höhe der stabförmigen Elemente über der Oberfläche beträgt das 0,1- bis 0,5-fache, vorzugsweise das 0,1 bis 0,2-fache der Dicke der Grenzschicht an der überströmten Oberfläche.

Aus der WO 00/01579 ist es bekannt, zum Reduzieren eines Strömungswiderstands, der mit einem begrenzten Überschaitströmungsgebiet, das sich über einer in einer Strömungsrichtung umströmten Oberfläche eines Strömungskörpers ausbildet, und das mit einem starken Verdichtungsstoß abschließt, verbunden Ist, Schlitze Im Bereich des Verdichtungsstoßes in der umströmten Oberfläche vorzusehen, durch die eine Rückströmung von der Rückseite des Verdichtungsstoßes auf dessen Vorderseite erfolgt.

Die US 4 706 910 beschreicht die Beeinflussung des Reibungswidestands eines Tragflächenprofils bei einer Unterschallströmung.

### AUFGABE DER ERFINDUNG

Der Erfindung liegt die Aufgabe zugrunde, eine passive Maßnahme zum Reduzieren eines Strömungswiderstands, der mit einem begrenzten Überschaliströmungsgeblet, das sich über einer in einer Strömungsrichtung umströmten Oberfläche eines Strömungskörpers ausbildet und das mit einem starken Verdichtungsstoß abschließt, aufzuzeigen, die über unterschledliche Strömungszustände, d.h. insbesondere über unterschiedliche Strömungsgeschwindigkeiten und Winkel des Strömungskörpers zur Strömungsrichtung, hinweg wirksam Ist und dennoch nur einen geringen technischen Aufwand erfordert, so dass sie bei vorhandenen Strömungskörpern, Insbesondere Flugzeugen, leicht nachrüstbar ist.

### LÖSUNG

Die Aufgabe der Erfindung wird erfindungsgemäß durch ein Verfahren mit den Merkmalen des Patentanspruchs 1 und durch einen Strömungskörper mit den Merkmalen des Patentanspruchs 6 gelöst.

Vorteilhafte Ausführungsformen des Verfahrens und der Vorrichtung sind in den Unteransprüchen 2 bis 5 bzw. 7 bis 12 beschrieben.

### BESCHREIBUNG DER ERFINDUNG

Bei der Erfindung wird die Strömungsgeschwindigkeit in quer zu der Strömungsrichtung voneinander beabstandeten und in der Strömungsrichtung langgestreckten Bereichen an der Oberfläche unterhalb der Schallgeschwindigkeit gehalten, so dass die Druckinformation von dem Verdichtungsatoß in diesen Bereichen entgegen der Strömungsrichtung an der Oberfläche nach vorne gelangt und sich von diesen Bereichen ausgehend quer zu der Strömungsrichtung an der Oberfläche ausbreitet. Durch die Übermittlung von Information über den Druckanstieg im Bereich des Verdichtungsstoßes entgegen der Strömungsrichtung nach vorne, die in einer Überschallströmung grundsätzlich nicht möglich ist, dickt die den Strömungskörper umgebende Grenzschicht auf. Der mit dem starken Verdichtungsstoß einhergehende Drucksprung selbst verursacht durch diese Aufdickung der Grenzschicht eine Anregung schwacher Verdichtungsstöße, durch die die Überschallströmung hindurchtritt, bevor sie auf den starken Verdichtungsstoß auftrifft. Die damit einhergehende schrittweise Abbremsung der Überschallströmung ist von der Gesamtenergiebilanz her günstiger als die Abbremsung der Überschallströmung allein im Bereich des starken Verdichtungsstoßes. Es erweist sich als ausreichend, die Bereiche mit der Strömungsgeschwindigkeit unterhalb der Schallgeschwindigkeit in vergleichsweise großen Abständen quer zur Strömungsrichtung vorzusehen. Die notwendige Druckinformation breitet sich von diesen Bereichen innerhalb der weit aufgefächerten Charakteristiken der schwachen Überschallströmung mit einer Querkomponente zur Strömungsausrichtung aus. Insbesondere bei schiebenden Auftriebskörpern haben die Bereiche mit der Strömungsgeschwindigkeit unterhalb der Schallgeschwindigkeit daher eine weit reichende Auswirkung quer zur Strömungsrichtung.

Die Maßnahmen, die in den Bereichen erforderlich sind, um die Strömungsgeschwindigkeit unterhalb der Schallgeschwindigkeit zu halten, führen grundsätzlich zu einer Erhöhung des viskosen Anteils des Strömungswiderstands in diesen Bereichen. Diese Erhöhung wird bei der Erfindung aber nicht nur durch den reduzierten Wellenwiderstand im Bereich des das Überschallströmungsgebiet abschließenden Verdichtungsstoßes kompensiert. Die in den erfindungsgemäßen Bereichen nach vorne gelangende Druckinformation breitet sich quer zu der Strömungsrichtung in den Zwischenraum dieser Bereiche aus und resultiert auch hier zu einer Aufdickung der Grenzschicht vor dem Verdichtungsstoß. Diese Aufdickung erfolgt über eine vergleichsweise lange Strecke in Strömungsrichtung. Der mit dieser Aufdickung verbundene viskose Strömungswiderstand ist verglichen mit dem viskosen Strömungswiderstand, der mit einer plötzlichen Aufdickung der Grenzschicht über den Verdichtungsstoß verbunden ist, nur gering. Es kommt also in dem Zwischenraum der Bereiche mit den erfindungsgemäßen Maßnahmen zu einer Reduktion des viskosen Anteils des Strömungswiderstands, die so groß sein kann, dass mit der Erfindung sowohl der viskose Strömungswiderstand als auch der Wellenwiderstand insgesamt reduziert ist.

Die Breite jedes Bereichs mit der Strömungsgeschwindigkeit unterhalb der Schallgeschwindigkeit ist quer zu der Strömungsrichtung so groß zu wählen, dass die Druckinformation über den Verdichtungsstoß in ausreichendem Maße innerhalb des Bereichs entgegen der Strömungsrichtung nach vorne übermittelt werden kann. Sie beträgt typischerweise einige wenige Zentimeter, kann im Einzelfall aber auch einige Dezimeter betragen. Ein typisches Verhältnis der Länge eines Bereichs In Strömungsrichtung und der Breite eines Bereichs quer zur Strömungsrichtung liegt zwischen 4 zu 1 bis 40 zu 1.

Die Länge jedes Bereichs mit der Strömungsgeschwindigkeit unterhalb der Schallgeschwindigkeit ist einerseits so festzulegen, dass hinreichend weit vor dem starken Verdichtungsstoß schwache Verdichtungsstöße Induziert werden, die möglichst die gesamte Fläche des starken Verdichtungsstoßes abdecken. Es macht aber wenig Sinn, die Bereiche soweit entgegen der Strömungsrichtung nach vorne auszudehnen, dass sie über den vordersten Beginn des Überschallströmungsgebiets hinausstehen.

Das hintere Ende der Bereiche mit der Strömungsgeschwindigkeit unterhalb der Schallgeschwindigkeit erstreckt sich bis nahe hinter den am weitesten hinten liegenden Ort des Verdichtungsstoßes, der bei dem jeweiligen Flugkörper auftritt. So ist eine Lageverschiebung des Verdichtungsatoßes mit unterschiedlichen Umströmungszuatänden ohne Einfluse auf die grundsätzliche Wirkung der Erfindung.

Die typischen Längen der Bereiche mit der Strömungsgeschwindigkeit unterhalb der Schallgeschwindigkeit der Störkörper liegen zwischen 30 % bis 80 % einer Sehnenlänge des Flugkörpers in der Strömungsrichtung.

Ein typisches Verhältnis der Längen in der Strömungsrichtung und der seitlichen Abstände der Bereiche mit der Strömungsgeschwindigkeit unterhalb der Schallgeschwindigkeit liegt zwischen 1 zu 8 bis 2 zu 1.

In einer ersten Alternative der Erfindung wird in den Bereichen, in denen die Strömungsgeschwindigkeit unterhalb der Schallgeschwindigkeit gehalten werden soll, Gruppen aus jeweils einer Vielzahl von kleinen Störkörpern angeordnet. Die einzelnen Störkörper stehen von der umströmten Oberfläche des Strömungskörpers ab. Jede Gruppe der Störkörper erstreckt sich zumindest von dem Bereich des das Überschallströmungsgeblet abschließenden starken Verdichtungsstoßes nach vorne.

Innerhalb Jeder Gruppe der Störkörper wird die Strömungsgeschwindigkeit durch die Störkörper unterhalb der Schallgeschwindigkeit gehalten.

Um in den Bereichen mit der Strömungsgeschwindigkeit unterhalb der Schallgeschwindigkeit den viskosen Strömungswiderstand aufgrund der Störkörper nicht unnötig stark zu erhöhen, sind relativ locker gestellte Störkörper gut geeignet, deren Anteil an dem von jeder Gruppe überspannten Volumen kleiner als 10 % ist.

Die Höhe geeigneter Störkörper ist von derselben Größenordnung wie die Dicke der ungestörten Grenzschicht der Strömung an der überströmten Oberfläche vor dem Stoß und beträgt typischerweise einige wenige Millimeter.

Um die Gruppen der Störkörper einfach und effektiv auf die umströmte Oberfläche des Strömungskörpers aufzubringen, sind die Störkörper vorzugsweise auf einem Trägerband angeordnet. Dieses Trägerband kann selbstklebend sein. Im praktischen Versuch hat sich ein handeisübliches Hakenband eines Haken- und Schlaufen-Textilverschlusses als Trägerband mit Störkörpern als geeignet erwiesen. Die von einem Hakenband gebildeten Störkörper sind zwar In gewissem Umfang flexibel. Sie werden aber von der Strömung nicht stark verformt. Zumindest ist ihre elastische Verformung für die Funktion der Erfindung nicht entscheidend, Entscheidend Ist allein, dass die StrömungsgeschwindigkeitIm Bereich jeder Gruppe der Störkörper eindeutig unterhalb der Schallgeschwindigkeit in der Strömung gehalten wird.

Statt einer Vielzahl einzeiner Störkörper in jedem der Bereiche sind bei einer zweiten Alternative der Erfindung Oberflächensegmente vorgesehen, die in den Bereichen, in denen die Strömungsgeschwindigkeit unterhalb der Schallgeschwindigkeit gehalten werden soll, parallel zu der Oberfläche verlaufen, Dabei kann es sich um jeweils ein Oberflächensegment je Bereich handeln; es können aber auch mehrere Oberflächensegmente In Jedem dieser Bereiche angeordnet werden. Typischerweise ist ihre Zahl Je Bereich aber klein. Die parallel zu der Oberfläche verlaufenden Oberflächensegmente reduzieren die Strömungsgeschwindigkeit insbesondere in dem einerseits durch sie und andererseits durch die Oberfläche begrenzten Zwischenraum, dessen Höhe normal zu der Oberfläche von der Größenordnung der Dicke der ungestörten Grenzschicht der Strömung an der Oberfläche vor dem starken Verdichtungsstoß ist. Zusätzlich kommt es auch an der von diesem Zwischenraum abgekehrten Seite der Oberflächensegmente zu einer Abbremsung der Strömungsgeschwindigkeit durch Grenzflächenreibung. Insgesamt wird so ein ausreichend großer Strömungsquerschnitt bereitgestellt, in den die Strömungsgeschwindigkeit unterhalb der Schallgeschwindigkeit liegt, so dass die Druckinformation von dem Verdichtungsstoß nach vorne gelangen und sich von dort quer zu der Strömungsrichtung zwischen die einzelnen Bereiche zwischen den erfinderischen Maßnahmen ausbreiten kann.

Um diese Ausbreitung weder zu behindern noch auf wenige Punkte zu begrenzen, sollten die von der Oberfläche und den Oberflächensegmenten begrenzten Zwischenräume quer zu der Strömungsrichtung über ihre wesentliche Länge offen sein.

Konkret können die Oberflächensegmente von dem Querbalken eines niedrigen, T-förmigen Profils oder von dem Mittelbereich eines gestreckten und umgekehrten, U-förmigen Profils ausgebildet werden. Im Falle des U-förmigen Profils, das einer Lufthutze entspricht, sind vorzugsweise Durchbrechungen in den Randbereichen vorzusehen, die das Profil mit der Oberfläche des Strömungskörpers verbinden.

### KURZBESCHREIBUNG DER FIGUREN

Im Folgenden wird die Erfindung anhand der Figuren weiter erläutert und beschrieben.
- **Fig. 1**: zeigt eine schematische Darstellung eines Ausführungsbeispiels der Erfindung, die die erfindungsgemäße Wirkung von Gruppen von kleinen Störkörpern auf einen ein Überschallströmungsgebiet abschließenden Verdichtungsstoß skizziert.
- **Fig. 2**: zeigt eine Gruppe der Störkörper gemäß Fig. 1 in vergrößerter Darstellung.
- **Fig. 3**: gibt gemessene statische Druckverteilungen für das Ausführungsbeispiel der Erfindung gemäß Fig. 1 wieder.
- **Fig. 4**: zeigt einen quer zur Strömungsrichtung verlaufenden Schnitt durch einen Bereich, in dem ein alternatives Mittel zu den Störkörpern des Ausführungsbeispiels der Erfindung gemäß Fig. 1 angeordnet ist; und
- **Fig. 5**: zeigt ein anderes alternatives Mittel zu den Störkörpern des Ausführungsbeispiels gemäß Fig. 1 der Erfindung, ebenfalls in einem quer zur Strömungsrichtung verlaufenden Schnitt.

### FIGURENBESCHREIBUNG

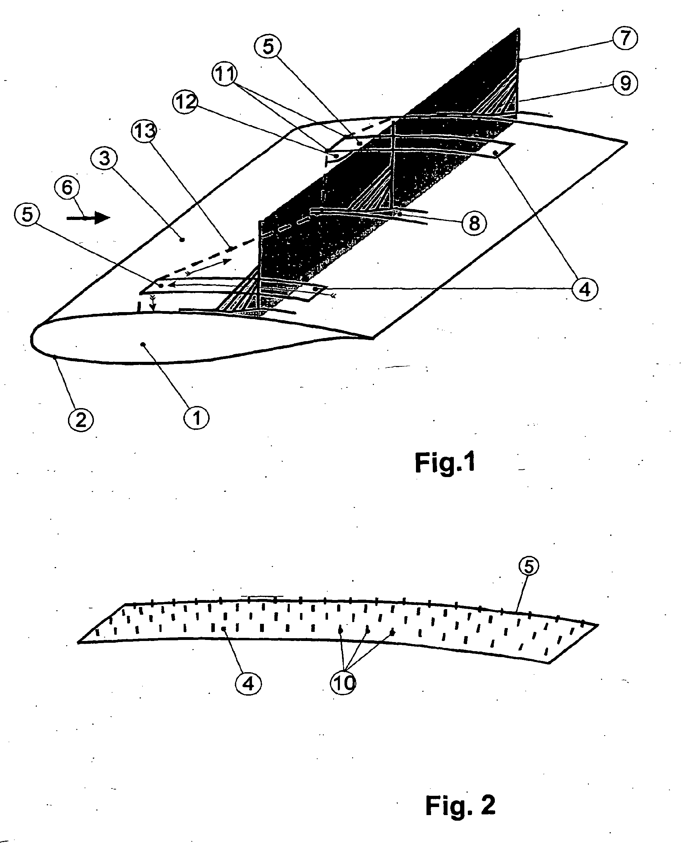

**Fig. 1** zeigt einen Auftriebskörper mit einer Sehnenlänge von 300 mm ais Beispiel für einen Strömungskörper 1, der in Strömungsrichtung 6 umströmt wird. Auf die umströmte Oberfläche 2 wurden an der Saugseite 3 des Strömungskörpers 1 in langgestreckten Bereichen 4 Abschnitte eines handelsüblichen selbstklebenden Hakenbands 5 aufgeklebt, wobei die Bereiche 4 bzw. die Abschnitte des Hakenbands 5 in der Strömungsrichtung 6 ausgerichtet wurden. Die Länge der Bereiche 4 beträgt 140 mm. Ein seitlicher Abstand der Bereiche 4 quer zur Strömungsrichtung 6 beträgt ebenfalls 140 mm. Die Höhe des Hakenbands 5 über der Oberfläche 2 beträgt 2 mm. In Bezug auf die Sehnenlänge c des Strömungskörpers 1 von 300 mm überdecken die Bereiche 4 einen Bereich von 20 % bis 67 % der Sehnenlänge. Die typische Lage eines starken, senkrechten Verdichtungsstoßes 7 über der Oberfläche 2 des Strömungskörpers 1 liegt damit bei allen relevanten Umströmungszuständen oberhalb der Bereiche 4. Die Bereiche 4, in denen hier jeweils eine Gruppe mit einer Vielzahl kleiner Störkörper vorgesehen ist, stellen Übertragungsstrecken für in Fig. 1 durch Pfeile angedeutete Druckinformation von dem starken Verdichtungsstoß 7 entgegen der Strömungsrichtung 6 nach vorne dar. Hiermit gelingt es durch den Verdichtungsstoß 7 selbst, die Grenzschicht 8 der Strömung entgegen der Strömungsrichtung 6 vor dem Verdichtungsstoß 7 über der Oberfläche 2 so aufzudicken, dass von ihr schwache schräge Verdichtungsstöße 9 ausgehen, die die durch sie hindurchtretende Strömung vor dem starken Verdichtungsstoß 7 abbremsen, was insgesamt mit einer geringeren Entropiezunahme und einem geringeren Wellenwiderstand verbunden ist. Selbst der viskose Widerstand des Strömungskörpers 1 kann durch den langsamen Anstieg der Dicke der Grenzschicht 8 verglichen mit dem Fall ohne das Hakenband 5, in dem die Dicke der Grenzschicht über den Verdichtungsstoß 7 sprunghaft ansteigt, verringert sein. Die sich kontinuierlich aufdickende Grenzschicht 8 wird dabei nicht nur im unmittelbaren Bereich der Bereiche 4 beobachtet, sondern auch in den dazwischen liegenden Bereichen. Von den in Strömungsrichtung vorne gelegenen Spitzen 11 der Bereiche 4 breitet sich die Druckinformation unter einem Winkel 12 der Größe arcsin 1/Ma, wobei Ma die lokale Machzahl der Strömung ist, quer zur Strömungsrichtung 6 aus. Damit liegt die Druckinformation von dem Verdichtungsstoß 7 hinter einer Linie 13 auch zwischen den Bereichen 4 vor. D.h. auch hier erfolgt die kontinuierliche Aufdickung der Grenzschicht 8, welche zu der erwünschten Induzierung der schwachen schrägen Stöße 9 führt.

Wie in **Fig. 2** angedeutet ist, ist in jedem Bereich 4 eine Gruppe aus einer Vielzahl einzelner kleiner Störkörper 10 vorgesehen.

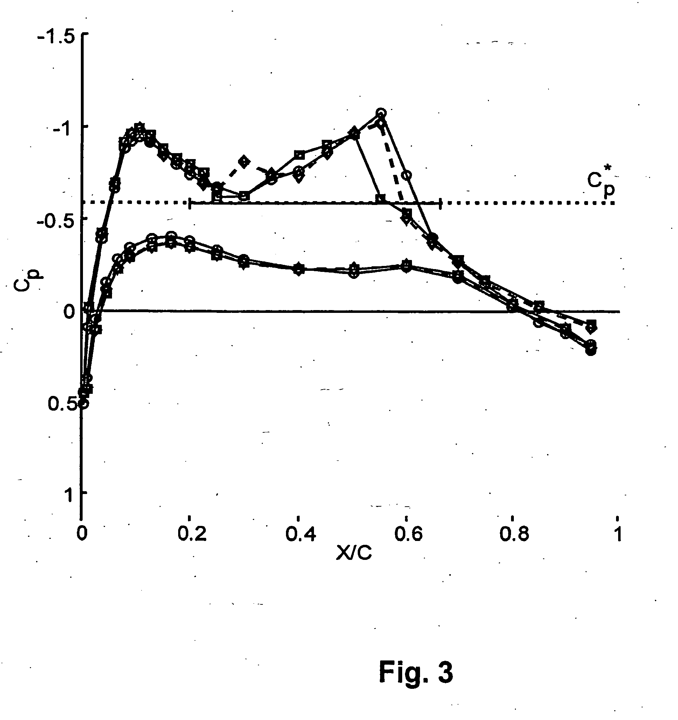

**Fig. 3** gibt Messergebnisse zu der Anordnung gemäß Fig. 1 unter Verwendung eines Hubschrauberprofils A1510-03 wieder. In einem Mittelschnitt zwischen zwei Abschnitten 4 wurde bei schallnaher Anströmung Ma = 0,75, Re = 2,27*10⁶ mit nahezu konstantem Auftriebsbeiwert von 0,34 und ohne Fixierung des laminar-turbulenten Grenzschichtumschlags die statische Druckverteilungen über der relativen Sehnenlänge x/c gemessen, die in Fig. 3 dargestellt sind. Weiterhin ist in Fig. 2 die Lage der Bereiche 4 in Strömungsrichtung durch einen Balken angedeutet. Gegenüber dem Fall ohne Störkörper 10 in den Bereichen 4 (Kreise) zeigt sich eine Reduktion der Stoßstärke durch die Verwendung der Störkörper 10 in den Bereichen 4 (geschlossene Quadrate). Die Auswirkung der Störkörper in den Bereichen 4 zeigt sich bereits bei 40 % der Sehnenlänge stromauf vor dem Verdichtungsstoß auf der über dem Balken wiedergegebenen Druckverteilung auf der Saugseite, indem die Beschleunigung der Umströmung stromab gemildert wird. D.h., die anschließende Abbremsung der Strömung über den starken Verdichtungsstoß hinweg fällt geringer aus. Die Druckverteilung um den starken Verdichtungsstoß herum ist ähnlich zu derjenigen, die sich bei einer optimal positionierten Oberflächenbeule zeigt. Die Störkörper 10 in den Bereichen 4 wurden für einen Vergleichsversuch mit Plastilin verspachtelt, so dass sich das von ihm überspannte Volumen nicht veränderte, ohne dass jedoch die einzelnen Haken des Hakenbands als Störkörper 10 wirken konnten, zwischen denen die Druckinformation entgegen der Strömungsrichtung von dem starken Verdichtungsstoß nach vorne ausbreiten kann. In diesem Fall ergab sich eine Druckverteilung (Rauten) ähnlich derjenigen im Fall ganz ohne die Störkörper 10 in den Bereichen 4. Die Druckverteilung an der Unterseite des Strömungskörpers 1 gemäß Fig. 1, die in Fig. 2 unterhalb des Balkens dargestellt ist, ist von der Anbringung der Störkörper 10 in den Bereichen 4 auf der Saugseite 3 im Wesentlichen unbeeinflusst.

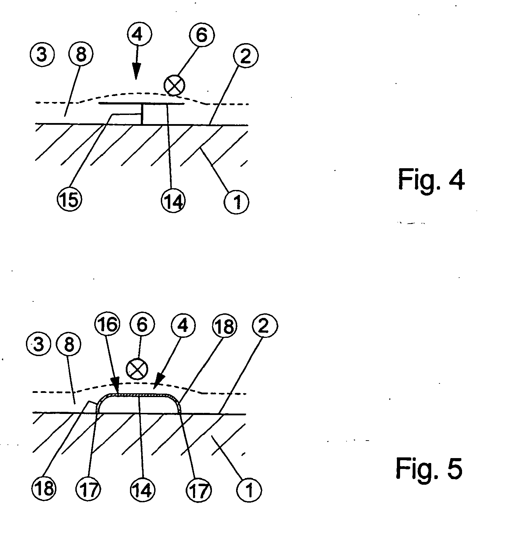

Der Schnitt durch einen Bereich 4, der in **Fig. 4** gezeigt ist, gibt eine alternative Ausführungsform von Mitteln wieder, um eine Übertragungsstrecke für Druckinformation von dem starken Verdichtungsstoß 7 gemäß Fig. 1 entgegen der Strömungsrichtung 6 nach vorne auszubilden. Hierzu ist gemäß Fig. 4 in dem Bereich 4 ein Oberflächensegment 14 vorgesehen, das über die gesamte Länge des Bereichs 4 parallel zu der Oberfläche 2 verläuft, und zwar in einem Abstand, der der Größenordnung der Dicke der ungestörten Grenzschicht 8 vor dem Verdichtungsstoß entspricht. Das Oberflächensegment 14 wird dabei von einem zentralen Träger 15 gehalten. Insbesondere zwischen der Oberfläche 2 und dem Oberflächensegment 14 wird durch die Reibung der Strömung an dem Oberflächensegment 14 und der Oberfläche 2 dafür Sorge getragen, dass die Strömung unterhalb des Überschallströmungsgebiets vor dem Verdichtungsstoß 7 über einen solchen Querschnitt auf Unterschallgeschwindigkeit gehalten wird, dass die Druckinformation von dem Verdichtungsstoß 7 entgegen der Strömungsrichtung 6 nach vorne gelangen und sich dort quer zu der Strömungsrichtung 6 an der Oberfläche 2 ausbreiten kann.

**Fig. 5** skizziert eine zu der Anordnung gemäß Fig. 4 alternative Ausführungsform, bei der das Oberflächensegment 14 in dem Bereich 4 durch eine Lufthutze 16 ausgebildet ist, deren mit der Oberfläche 2 verbundenen Randbereiche 17 Durchbrechungen 18 aufweisen. Durch die Durchbrechung 18 kommuniziert der innerhalb der Lufthutze 16 geführte Anteil der Strömung mit der Umgebung der Lufthutze 16. An dieser Stelle ist anzumerken, dass das Oberflächensegment 14 auch an seiner der Oberfläche 2 abgekehrten Seite die Strömungsgeschwindigkeit unter der Schallgeschwindigkeit hält und somit den Querschnitt der Strömung vergrößert, über den die Druckinformation entgegen der Strömungsrichtung (6) nach vorne gelangen kann.

### BEZUGSZEICHENLISTE

- 1: Strömungskörper
- 2: Oberfläche
- 3: Saugseite
- 4: Bereich
- 5: Hakenband
- 6: Strömungsrichtung
- 7: Starker Verdichtungsstoß
- 8: Grenzschicht
- 9: Schwacher Verdichtungsstoß
- 10: Störkörper
- 11: Spitze
- 12: Winkel
- 13: Linie
- 14: Oberflächensegment
- 15: Träger
- 16: Lufthutze

## Patentansprüche

1. Verfahren zum Reduzieren eines Strömungswiderstands, der mit einem begrenzten Überschallströmungsgebiet, das sich über einer in einer Strömungsrichtung (6) umströmten Oberfläche (2) eines Strömungskörpers (1) ausbildet und das mit einem starken Verdichtungsstoß (7) abschließt, verbunden Ist, wobei die Strömungsgeschwindigkelt in quer zu der Strömungsrichtung (6) voneinander beabstandeten und in der Strömungsrichtung (6) langgestreckten Bereichen (4) an der Oberfläche (2) unterhalb der Schallgeschwindigkeit gehalten wird, indem
- in jedem der Bereiche (4) eine Gruppe aus einer Vielzahl von kleinen Störkörpern zur Erzeugung schwacher Verdichtungsstöße auf der Oberfläche (2) angeordnet wird, wobei die Höhe der Störkörper über der Oberfläche (2) von der Größenordnung der Dicke der ungestörten Grenzschicht (8) der Strömung an der Oberfläche (2) vor dem starken Verdichtungsstoß (7) ist,
oder
- in den Bereichen (4) parallel zu der Oberfläche (2) verlaufende Oberflächensegmente (14) angeordnet werden, wobei der Abstand der Oberflächensegmente (14) von der Oberfläche (2) von der Größenordnung der Dicke der ungestörten Grenzschicht (8) der Strömung an der Oberfläche (2) vor dem starken Verdichtungsstoß (7) Ist,
so dass die Druckinformation von dem Verdichtungsstoß (7) in diesen Bereichen (4) entgegen der Strömungsrichtung (6) an der Oberfläche (2) nach vorne gelangt und sich von diesen Bereichen (4) ausgehend quer zu der Strömungsrichtung (6) an der Oberfläche (2) ausbreitet.

2. Verfahren nach Anspruch 1, wobei In Jedem der Bereiche (4) eine Gruppe aus einer Vielzahl von kleinen Störkörpern zur Erzeugung schwacher Verdichtungsstöße auf der Oberfläche (2) angeordnet wird, **dadurch gekennzeichnet, dass** der Anteil der Störkörper an dem von jeder Gruppe überspannten Volumen kleiner als 10 % ist.

3. Verfahren nach einem der voranstehenden Ansprüche, **dadurch gekennzeichnet, dass** sich die Bereiche (4) in der Strömungsrichtung (6) bis hinter den am weitesten hinten liegenden Ort des starken Verdichtungsstoßes (7) erstrecken.

4. Verfahren nach einem der voranstehenden Ansprüche, **dadurch gekennzeichnet, dass** die Länge der Bereiche (4) zwischen 30 % bis 80 % einer Sehnenlänge des Strömungskörpers (1) in der Strömungsrichtung (6) liegt.

5. Verfahren nach einem der voranstehenden Ansprüche, **dadurch gekennzeichnet, dass** die Länge der Bereiche (4) in der Strömungsrichtung (6) und ihr seitlicher Abstand ein Verhältnis von 1:8 bis 2:1 aufweisen.

6. Strömungskörper mit einer Vorrichtung zum Reduzieren eines Strömungswiderstands, der mit einem begrenzten Überschallströmungsgebiet, das sich über einer In einer Strömungsrichtung (6) umströmten Oberfläche (2) des Strömungskörpers (1) ausbildet und das mit einem starken Verdichtungsstoß (7) abschließt, verbunden ist, wobei in quer zu der Strömungsrichtung (6) voneinander beabstandeten und in der Strömungsrichtung (6) langgestreckten Bereichen (4) Mittel an der Oberfläche (2) vorgesehen sind, die die Strömungsgeschwindigkelt an der Oberfläche (2) innerhalb der Bereiche (4) unterhalb der Schallgeschwindlgkelt halten, indem
- In jedem der Bereiche (4) eine Gruppe aus einer Vielzahl von kleinen Störkörpern zur Erzeugung schwacher Verdichtungsstöße auf der Oberfläche (2) angeordnet ist, wobei die Höhe der Störkörper von der Größenordnung der Dicke der ungestörten Grenzschicht (8) der Strömung an der Oberfläche (2) vor dem starken Verdichtungsstoß (7) Ist, oder
- in den Bereichen (4) parallel zu der Oberfläche (2) verlaufende Oberflächensegmante (14) angeordnet sind, wobei der Abstand der Oberflächensegmente (14) von der Oberfläche (2) von der Größenordnung der Dicke der ungestörten Grenzschicht (8) der Strömung an der Oberfläche (2) vor dem starken Verdichtungsstoß (7) ist,
so dass die Druckinformation von dem Verdichtungsstoß (7) In diesen Bereichen (4) entgegen der Strömungsrichtung (6) an der Oberfläche (2) nach vorne gelangt und sich von diesen Bereichen (4) ausgehend quer zu der Strömungsrichtung (6) an der Oberfläche (2) ausbreitet.

7. Strömungskörper nach Anspruch 6, wobei in Jedem der Bereiche (4) eine Gruppe aus einer Vielzahl von kleinen Störkörpern zur Erzeugung schwacher Verdichtungsstöße auf der Oberfläche (2) angeordnet ist, **dadurch gekennzeichnet, dass** der Anteil der Störkörper an dem von jeder Gruppe überspannten Volumen kleiner als 10 % ist.

8. Strömungskörper nach Anspruch 7, **dadurch gekennzeichnet, dass** die Störkörper auf einem insbesondere selbstklebenden Trägerband angeordnet sind.

9. Strömungskörper nach Anspruch 8, **dadurch gekennzeichnet, dass** das Trägerband mit den Störkörpern ein Hakenband (5) ist.

10. Strömungskörper nach einem der Ansprüche 6-9, **dadurch gekennzeichnet, dass** sich die Bereiche (4) in der Strömungsrichtung (6) bis hinter den am weitesten hinten liegenden Ort des starken Verdichtungsstoßes (7) erstrecken.

11. Strömungskörper nach einem der Ansprüche 6-10, **dadurch gekenngeichnet, dass** die Länge der Bereiche (4) zwischen 30 % bis 80 % einer Sehnenlänge des Strömungskörpers (1) in der Strömungsrichtung (6) liegt.

12. Strömungskörper nach einem der Ansprüche 6-11, **dadurch gekennzeichnet, dass** die Länge der Bereiche (4) in der Strömungsrichtung (6) und ihr seitlicher Abstand ein Verhältnis von 1:8 bis 2:1 aufweisen.

## Claims

1. A method of reducing a drag due to a limited supersonic flow region which is formed above a surface (2) of a flow body (1) over which a flow goes in a flow direction (6), and which is terminated by a strong shock (7), the flow velocity being kept below the sound-propagation velocity in areas (4) at the surface (2), which are arranged at a distance lateral to the flow direction (6) and which are elongated in the flow direction (6), in that
- in each of the areas (4), a group of a plurality of small disturber bodies for generating weak shocks is arranged on the surface (2), the height of the disturber bodies above the surface (2) having the order of magnitude of the thickness of the undisturbed boundary layer (8) of the flow at the surface (2) in front of the strong shock (7),
or
- in the areas (4), surface segments (14) are arranged in parallel to the surface (2), the distance of the surface segments (14) from the surface (2) having the order of magnitude of the thickness of the undisturbed boundary layer (8) of the flow at the surface (2) in front of the strong shock (7),
so that the pressure information of the shock (7) gets forward against the flow direction (6) at the surface (2) in these areas (4) and spreads starting from these areas (4) laterally to the flow direction (6) at the surface (2).

2. The method of claim 1, wherein in each of the areas (4) a group of a plurality of small disturber bodies for generating weak shocks is arranged on the surface (2), **characterized in that** the portion of the disturber bodies of the volume covered by each group is smaller than 10 %.

3. The method of any of the preceding claims, **characterized in that** the areas (4) extend in the flow direction (6) beyond the furthest back point of the strong shock (7).

4. The method of any of the preceding claims, **characterized in that** the length of the areas (4) is between 30 % to 80 % of a chord length of the flow body (1) in the flow direction (6).

5. The method of any of the preceeding claims, **characterized in that** the length of the areas (4) in the flow direction (6) and their lateral distance have a ratio of 1:8 to 2:1.

6. A flow body comprising a device for reducing a drag due to a limited super sonic flow region which is formed above a surface (2) of a flow body (1) over which a flow goes in a flow direction (6), and which is terminated by a strong shock (7), means being provided at the surface (2) in areas (4) arranged at a distance lateral to the flow direction (6) and elongated in the flow direction (6), the means keeping the flow velocity below the sound-propagation velocity at the surface (2) in that
- in each of the areas (4), a group of a plurality of small disturber bodies for generating weak shocks is arranged on the surface (2), the height of the disturber bodies above the surface (2) having the order of magnitude of the thickness of the undisturbed boundary layer (8) of the flow at the surface (2) in front of the strong shock (7),
or
- in the areas (4), surface segments (14) are arranged in parallel to the surface (2), the distance of the surface segments (14) from the surface (2) having the order of magnitude of the thickness of the undisturbed boundary layer (8) of the flow at the surface (2) in front of the strong shock (7),
so that the pressure information of the shock (7) gets forward against the flow direction (6) at the surface (2) in these areas (4) and spreads starting from these areas (4) laterally to the flow direction (6) at the surface (2)

7. The flow body of claim 6, wherein in each of the areas (4) a group of a plurality of small disturber bodies for generating weak shocks is arranged on the surface (2), **characterized in that** the portion of the disturber bodies of the volume covered by each group is smaller than 10%

8. The flow body of claim 7, **characterized in that** the disturber bodies are arranged on a, particularly self adhesive, carrier tape.

9. The flow body of claim 8, **characterized in that** the carrier tape with the disturber bodies is a hook tape (5).

10. The flow body of any of the claims 6 to 9, **characterized in that** the areas (4) extend in the flow direction (6) beyond the furthest back point of the strong shock (7).

11. The flow body of any of the claims 6 to 10, **characterized in that** the length of the areas (4) is between 30 % to 80 % of a chord length of the flow body (1) in the flow direction (6).

12. The flow body of claims 6 to 11, **characterized in that** the length of the areas (4) in the flow direction (6) and their lateral distance have a ratio of 1:8 to 2:1.

## Revendications

1. Procédé destiné à diminuer une traînée qui est associée à une zone d'écoulement supersonique limitée, qui se forme au-dessus d'une surface (2) d'un corps aérodynamique (1), contournée par les flux dans une direction d'écoulement (6), et qui se termine par une forte onde de choc (7), la vitesse d'écoulement étant maintenue inférieure à la vitesse du son dans des zones (4) sur la surface (2), situées à distance les unes des autres dans le sens transversal à la direction d'écoulement (6) et allongées dans la direction d'écoulement (6), en ce que
- dans chacune des zones (4) est disposé un groupe formé par une pluralité de petits corps de perturbation destinés à générer de faibles chocs de compression sur la surface (2), la hauteur des corps de perturbation au-dessus de la surface (2) étant de l'ordre de grandeur de l'épaisseur de la couche limite (8) non perturbée de l'écoulement sur la surface (2) devant la forte onde de choc (7), ou
- dans les zones (4) sont disposés des segments de surface (14), parallèles à la surface (2), la distance entre les segments de surface (14) et la surface (2) étant de l'ordre de grandeur de l'épaisseur de la couche limite (8) non perturbée de l'écoulement sur la surface (2) devant la forte onde de choc (7),
de telle sorte que l'information de pression relative à l'onde de choc (7) dans ces zones (4) parvient vers l'avant dans le sens opposé à la direction d'écoulement (6) sur la surface (2) et se propage à partir de ces zones (4) transversalement à la direction d'écoulement (6) sur la surface (2).

2. Procédé selon la revendication 1, dans lequel dans chacune des zones (4) est disposé un groupe formé par une pluralité de petits corps de perturbation destinés à générer de faibles ondes de chocs sur la surface (2), **caractérisé en ce que** la part des corps de perturbation dans le volume couvert par chaque groupe est inférieur à 10 %.

3. Procédé selon l'une quelconque des revendications précédentes, **caractérisé en ce que** les zones (4) s'étendent dans la direction d'écoulement (6) jusque derrière l'endroit de la forte onde de choc (7), situé le plus en arrière.

4. Procédé selon l'une quelconque des revendications précédentes, **caractérisé en ce que** la longueur des zones (4) se situe entre 30 % et 80 % d'une longueur de corde du corps aérodynamique (1) dans la direction d'écoulement (6).

5. Procédé selon l'une quelconque des revendications précédentes, **caractérisé en ce que** la longueur des zones (4) dans la direction d'écoulement (6) et leur écartement latéral sont dans un rapport de 1:8 à 2:1.

6. Corps aérodynamique comportant un dispositif destiné à diminuer une traînée qui est associée à une zone d'écoulement supersonique limitée, qui se forme au-dessus d'une surface (2) du corps aérodynamique (1), parcourue par les flux dans une direction d'écoulement (6), et qui se termine par une forte onde de choc (7), des moyens étant prévus sur la surface (2) dans des zones (4), situés à distance les uns des autres dans le sens transversal à la direction d'écoulement (6) et allongées dans la direction d'écoulement (6), qui maintiennent la vitesse d'écoulement sur la surface (2), à l'intérieur des zones (4) au dessous de la vitesse du son, en ce que
- dans chacune des zones (4) est disposé un groupe formé par une pluralité de petits corps de perturbation destinés à générer de faibles ondes de choc sur la surface (2), la hauteur des corps de perturbation au-dessus de la surface (2) étant de l'ordre de grandeur de l'épaisseur de la couche limite (8) non perturbée de l'écoulement sur la surface (2) à l'avant de la forte onde de choc (7), ou
- dans les zones (4) sont disposées des segments de surface (14), parallèles à la surface (2), la distance entre les segments de surface (14) et la surface (2) étant de l'ordre de grandeur de l'épaisseur de la couche limite (8) non perturbée de l'écoulement sur la surface (2) devant la forte onde de choc (7),
de telle sorte que l'information de pression relative à l'onde de choc (7) dans ces zones (4) parvient vers l'avant dans le sens opposé à la direction d'écoulement (6) sur la surface (2) et se propage à partir de ces zones (4) transversalement à la direction d'écoulement (6) sur la surface (2).

7. Corps aérodynamique selon la revendication 6, dans lequel dans chacune des zones (4) est disposé un groupe formé par une pluralité de petits corps de perturbation destinés à générer de faibles ondes de choc sur la surface (2), **caractérisé en ce que** la part des corps de perturbation dans le volume couvert par chaque groupe est inférieur à 10 %.

8. Corps aérodynamique selon la revendication 7, **caractérisé en ce que** les corps de perturbation sont disposés sur une bande de support en particulier autoadhésive.

9. Corps aérodynamique selon la revendication 8, **caractérisé en ce que** la bande de support avec les corps de perturbation constitue une bande à crochets (5).

10. Corps aérodynamique selon l'une quelconque des revendications 6 à 9, **caractérisé en ce que** les zones (4) s'étendent dans la direction d'écoulement (6) jusque derrière l'endroit de la forte onde de choc (7), situé le plus en arrière.

11. Corps aérodynamique selon l'une quelconque des revendications 6 à 10, **caractérisé en ce que** la longueur des zones (4) se situe entre 30 % et 80 % d'une longueur de corde du corps aérodynamique (1) dans la direction d'écoulement (6).

12. Corps aérodynamique selon l'une quelconque des revendications 6 à 11, **caractérisé en ce que** la longueur des zones (4) dans la direction d'écoulement (6) et leur écartement latéral sont dans un rapport de 1:8 à 2:1.
